# EUROPÄISCHE PATENTSCHRIFT

(11) **EP 2 831 436 B1**
(45) Veröffentlichungstag und Bekanntmachung des Hinweises auf die Patenterteilung: **28.12.2016**
(21) Anmeldenummer: 13707655.0
(22) Anmeldetag: 07.03.2013
(51) Int. Cl.: F16C 33/64

(54) **WÄLZLAGERBAUTEIL**
ROLLING BEARING COMPONENT
COMPOSANT DE PALIER À ROULEMENT

(30) Priorität: 30.03.2012 DE 102012205242
(43) Veröffentlichungstag der Anmeldung: 04.02.2015
(73) Patentinhaber: Schaeffler Technologies AG & Co. KG, 91074 Herzogenaurach (DE)
(72) Erfinder: STREIT, Edgar, 97711 Poppenlauer (DE); BEER, Oskar, 84032 Landshut (DE)
(86) Internationale Anmeldenummer: PCT/EP2013/054546
(87) Internationale Veröffentlichungsnummer: WO 2013/143817

(56) Entgegenhaltungen:
- EP-A1- 2 221 389
- EP-B1- 1 774 187
- DE-A1-102006 025 008
- US-A1- 2006 029 318

## Beschreibung

### Gebiet der Erfindung

Die Erfindung betrifft ein Wälzlagerbauteil, insbesondere einen Lagerring eines Wälzlagers.

### Hintergrund der Erfindung

Maschinenelemente für Wälzbelastung sind beispielsweise aus der US 2006/0029318 A1, EP 1 774 187 B1 sowie aus der EP 1 774 188 B1 bekannt. Es handelt sich dabei um Wälzlagerelemente, insbesondere Lagerringe, aus einem Stahl mit martensitischem Gefüge, welche eine thermochemisch erzeugte, mit Stickstoff angereicherte Randschicht aufweisen.

### Aufgabe der Erfindung

Der Erfindung liegt die Aufgabe zugrunde, ein Wälzlagerbauteil gegenüber dem genannten Stand der Technik weiterzuentwickeln.

### Zusammenfassung der Erfindung

Diese Aufgabe wird erfindungsgemäß gelöst durch ein Wälzlagerbauteil mit den Merkmalen des Anspruchs 1. Das Wälzlagerbauteil ist vorzugsweise als Lagerring ausgebildet und weist folgende Merkmale auf:
- eine aufgestickte Randzone mit von außen nach innen abnehmendem Stickstoffgehalt,
- eine Kernzone mit zumindest annähernd konstanter Härte,
- von außen nach innen abnehmende Druckeigenspannungen in der Randzone,
- eine Härte von 870 bis 1000 HV 0,3 in einer Tiefe von 0,04 mm, im Folgenden auch Randhärte genannt,
wobei
- die Härte in einer Tiefe von 0,3 mm um höchstens 250 HV 0,3 geringer als die Randhärte ist.

Die Erfindung geht von der Überlegung aus, dass im Falle von sicherheitskritischen Anwendungen wie z.B. in der Luftfahrt von Maschinenelementen neben einer möglichst hohen Lebensdauer auch ein hohes Maß an Schadenstoleranz gefordert wird. Tritt im Einzelfall ein zunächst lokaler kleiner Schaden auf, so muss die Funktionsfähigkeit des Maschinenelements zumindest so lange erhalten bleiben, bis ein gefahrloses Stillsetzten des entsprechenden Gerätes möglich ist (z.B. Erreichen des Zielflughafens im Falle eines Flugzeuges). Dazu ist neben einer möglichst frühen Erkennbarkeit eines beginnenden Schadens auch eine hohe Schadenstoleranz aller Bauteile nötig.

Im Falle von Wälzlagerkomponenten mit aufgestickter Randzone wird durch die erfindungsgemäße Eingrenzung der Härte, bezogen auf eine Tiefe von 40 µm, von mindestens 870 HV 0,3 und maximal 1000 HV 0,3 auch der Eigenspannungsverlauf soweit eingegrenzt, dass die bei einer schadensbedingten Unterbrechung der aufgestickten Zone entstehenden Schubspannungen derart begrenzt werden, dass die Ausbreitung einer Schädigung bei Überrollbeanspruchung nicht wesentlich schneller als im Falle einer nicht aufgestickten Randzone erfolgt. Weiterhin würde das aufgestickte Material mit steigender Härte auch an Duktilität verlieren; eine verringerte Duktilität bedeutet auch einen geringeren Widerstand gegen die Ausbreitung einer Schädigung.

Durch die angegebenen Grenzen der Randhärte sowie die Begrenzung der maximalen Differenz zwischen der minimalen Härte in der Kernzone und der Randhärte auf 250 HV 0,3 wird ein Bauteil bereitgestellt, das in optimaler Weise den Anforderungen an hohen Widerstand gegen die Entstehung einer Schädigung - ausreichende Härte und Druckeigenspannungen - und gleichzeitig gegen die Ausbreitung einer Schädigung - hohe Duktilität und nicht zu hohe Eigenspannungen - gerecht wird. In einer Tiefe von 0,3 mm beträgt die Härte, in HV 0,3 angegeben, mehr als 75%, insbesondere mehr als 80%, der Härte in der Tiefe von 0,04 mm. Der Absolutbetrag der Druckeigenspannung an der Oberfläche des Wälzlagerbauteils beträgt mindestens 500 MPa und höchstens 1000 MPa. Der Betrag der Druckeigenspannung in einer Tiefe von 0,05 mm beträgt weniger als 60%, insbesondere weniger als 50%, des Betrages der Druckeigenspannung an der Oberfläche.

Die Druckeigenspannungen in der Randzone des Wälzlagerbauteils existieren zumindest im mechanisch nicht belasteten Zustand des Wälzlagerbauteils, wobei sich auch alle diesbezüglichen Angaben in den Unteransprüchen auf den mechanisch unbelasteten Zustand des Wälzlagerbauteils beziehen.

In bevorzugter Ausgestaltung entspricht die Tiefe, in welcher 80% des Maximalwerts des Stickstoffgehalts in der Randzone unterschritten wird, mindestens der 1,75 fachen Tiefe, insbesondere mindestens der doppelten Tiefe, beispielsweise der dreifachen Tiefe, in welcher die Druckeigenspannung 80% der maximalen Druckeigenspannung beträgt.

Die Tiefe, in welcher 80% des Maximalwerts des Stickstoffgehalts in der Randzone unterschritten wird, die so genannte 80%-Stickstoffgrenze, entspricht vorzugsweise höchstens der achtfachen Tiefe, insbesondere höchstens der vierfachen Tiefe, in welcher die Druckeigenspannung den Wert von 80% der maximalen Druckeigenspannung in der Randzone unterschreitet (80%-Druckeigenspannungsgrenze). Nach verschiedenen möglichen Ausführungsformen liegt die 80%-Stickstoffgrenze somit im Bereich zwischen dem 1,75 fachen und dem Vierfachen oder im Bereich zwischen dem Doppelten und dem Vierfachen oder im Bereich zwischen dem Dreifachen und dem Vierfachen oder im Bereich zwischen dem 1,75 fachen und dem Achtfachen oder im Bereich zwischen dem Doppelten und dem Achtfachen oder im Bereich zwischen dem Dreifachen und dem Achtfachen der 80%-Druckeigenspannungsgrenze.

Durch die genannte Eingrenzung der Härte sowie Härtedifferenzen bei gleichzeitig in der angegebenen Weise festgelegten Grenzen des Verlaufs der Druckeigenspannungen sowie des Gehalts an Stickstoff wird ein Wälzlagerbauteil bereitgestellt, welches den konkurrierenden Anforderungen an die Zähigkeit und Härte gleichermaßen gerecht wird. Insbesondere ist eine hohe Toleranz gegen Ausbreitung einer lokalen Unterbrechung ("Schädigung") der aufgestickten Zone bei Überrollbeanspruchung sowie eine hohe Betriebsdauer unter erschwerten Bedingungen (z.B. Verschmutzung im Ölstrom) gegeben.

Bei dem metallischen Werkstoff, aus dem das Wälzlagerbauteil gefertigt ist, handelt es sich beispielsweise um Stahl mit der Bezeichnung M50 (AMS 6490/6491, 80 MoCrV 42-16) oder M50NIL (AMS 6278, 13 MoCrNiV 42-16-14). Weitere verwendbare Werkstoffe sind im eingangs zitierten Stand der Technik angegeben.

### Kurze Beschreibung der Zeichnungen

Nachfolgend werden Ausführungsbeispiele der Erfindung anhand einer Zeichnung näher erläutert. Hierin zeigen:
- Fig. 1: ein erstes Wälzlager in einer schematischen Schnittdarstellung,
- Fig. 2: im Querschnitt einen Lagerring eines zweiten Wälzlagers,
- Fig. 3: in einer Prinzipdarstellung die Ausbildung von Schubspannungen bei Unterbrechung einer eigenspannungsbehafteten Schicht,
- Fig. 4: ein Härteprofil eines Wälzlagerbauteils,
- Fig. 5: ein Eigenspannungsprofil des Wälzlagerbauteils nach Fig. 4,
- Fig. 6: ein Stickstoffprofil des Wälzlagerbauteils nach Fig. 4.

### Ausführliche Beschreibung der Zeichnungen

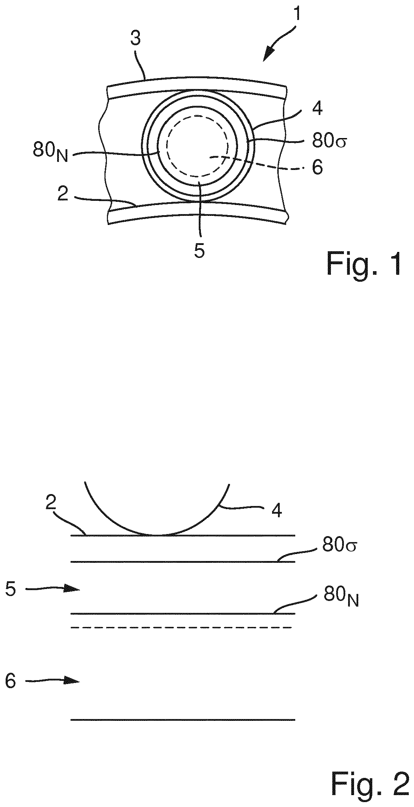

Die Fig. 1 zeigt ausschnittsweise ein insgesamt mit dem Bezugszeichen 1 gekennzeichnetes Wälzlager, nämlich Kugellager, mit Lagerringen 2,3, nämlich einem Innenring 2 und einem Außenring 3, allgemein als Wälzlagerbauteile 2,3 bezeichnet, und Wälzkörpern 4, welche ebenfalls unter den Begriff Wälzlagerbauteile subsumiert werden. Sämtliche Wälzlagerbauteile sind in diesem Fall aus metallischen Werkstoffen gefertigt.

Jeder Wälzkörper 4 ist aus Stahl mit martensitischem Gefüge gebildet und weist eine thermochemisch erzeugte, aufgestickte Randzone 5 sowie eine sich von dieser hinsichtlich mehrerer Parameter, insbesondere der chemischen Zusammensetzung, unterscheidende Kernzone 6 auf. Der Übergang zwischen der Randzone 5 und der Kernzone 6 ist in Fig. 1 durch eine gestrichelte Linie, deren Lage - wie die gesamte Darstellung - nicht maßstäblich ist, markiert.

Innerhalb der Randzone 5 existieren von außen nach innen abnehmende Druckeigenspannungen, wobei die Grenze, an welcher 80% der maximalen Druckeigenspannung unterschritten wird, als 80%-Druckeigenspannungsgrenze bezeichnet und in der Figur mit 80σ gekennzeichnet ist.

Der in der Randzone 5 vorhandene Stickstoff nimmt ebenfalls von der Oberfläche des Wälzkörpers 4 nach innen ab. Die Grenze, an welcher 80% der maximalen Stickstoffkonzentration unterschritten wird, ist als 80%- Stickstoffgrenze bezeichnet und in der Figur mit 80_{N} gekennzeichnet. Die 80%- Stickstoffgrenze 80_{N} liegt, von der Oberfläche des Wälzkörpers 4 aus gemessen, mindestens 1,75 mal so tief, beispielsweise doppelt so tief, insbesondere drei mal so tief, wie die 80%-Druckeigenspannungsgrenze 80_{σ}. Innerhalb der Randzone 5 beträgt die Härte des Wälzkörpers 4, bezogen auf eine Tiefe von 40 µm, mindestens 870 HV 0,3 und maximal 1000 HV 0,3. Die genannte Tiefe von 40 µm liegt vorzugsweise zwischen der 80%-Druckeigenspannungsgrenze 80_{σ} und der 80%- Stickstoffgrenze 80_{N}. In der Kernzone 6 ist die Härte um höchstens 250 HV 0,3 geringer als in der Randzone 5.

Das Wälzlager 1 nach Fig. 2 ist beispielsweise als Lager in einer Gasturbine verwendbar. Die Beschaffenheit der Lagerringe 2,3 des Wälzlagers 1 nach Fig. 2 entspricht, was die vorstehend beschriebenen Materialparameter betrifft, der Beschaffenheit der Wälzkörper 4 des Ausführungsbeispiels nach Fig. 1. Insbesondere beträgt auch in diesem Fall die Härte des Wälzlagerbauteils 2,3 in einer Tiefe von 40 µm mindestens 870 HV 0,3 und maximal 1000 HV 0,3. Ebenso ist die Härte des Wälzlagerbauteils 2,3 in einer Tiefe von 0,3 mm 6 um höchstens 250 HV 0,3 geringer als in der Randzone 5.

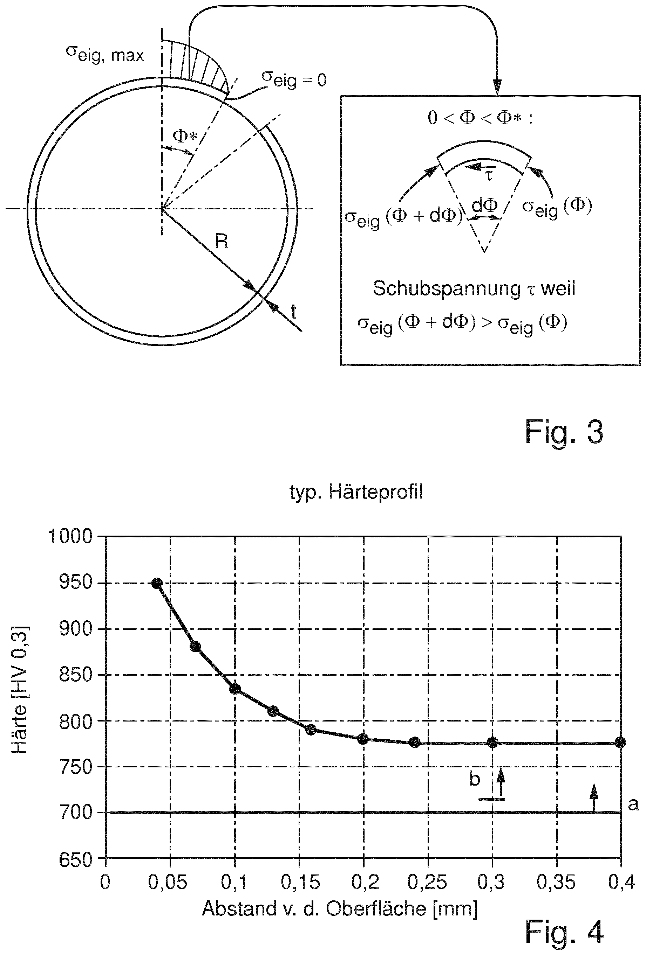

Fig. 3 zeigt die Herleitung der Entstehung von Schubspannungen im Falle einer unterbrochenen eigenspannungsbehafteten Schicht. Bei dem in Fig. 3 sichtbaren Wälzlagerbauteil 4 handelt es sich den Wälzkörper 4 des Ausführungsbeispiels nach Fig. 1, wobei in Fig. 3 eine Beschädigung der nitrierten Randzone 5 in schematisierter Weise dargestellt ist. Ebenso könnte es sich beim Wälzlagerbauteil 4 nach Fig. 3 um einen Lagerring 2, 3, wie in Fig. 2 dargestellt, handeln. Ist die mit Stickstoff angereicherte Schicht, das heißt die Randzone 5, wie in Fig. 3 sichtbar, lokal unterbrochen, wirkt an der Stelle der Unterbrechung (freie Oberfläche) keine Spannung. Ansonsten ist in diesem Fall die Eigenspannung als Mittelwert über die Schichtdicke zu verstehen.

Innerhalb eines bestimmten Winkelbereiches φ* steigt die Eigenspannung (Normalspannung) kontinuierlich bis zur Eigenspannung im ungestörten Bereich an. Innerhalb dieses Bereiches ansteigender Eigenspannung muss aus Gleichgewichtsgründen eine zusätzliche Schubspannung τ wirken. Diese zusätzliche Schubspannung τ begünstigt die Weiterentwicklung eines Schadens. Je höher die Druckeigenspannung in der Randzone 5 ist, desto höher ist auch die im Schadensfalle entstehende Schubspannung. Die Druckeigenspannung in der aufgestickten Randschicht 5 des Wälzlagerbauteils 4 steht wiederum in Zusammenhang mit der ausgebildeten Härte.
Fig. 4 zeigt den Härteverlauf des Wälzlagerbauteils 4 nach Fig. 3 bei erfindungsgemäßer Randhärte. Wie aus Fig. 4 ersichtlich ist, beträgt die Randhärte 950 HV 0,3. Ein um 250 HV 0,3 reduzierter Härtewert, das heißt 700 HV, ist in allen Bereichen des Wälzlagerbauteils 4, deutlich überschritten (siehe Detail a in Fig. 3). Ebenso geht aus Fig. 4 hervor, dass in einer Tiefe von 0,3 mm die Härte, in HV 0,3 angegeben, mehr als 75% der Härte in der Tiefe von 0,04 mm, das heißt der Randhärte, beträgt (Detail b).

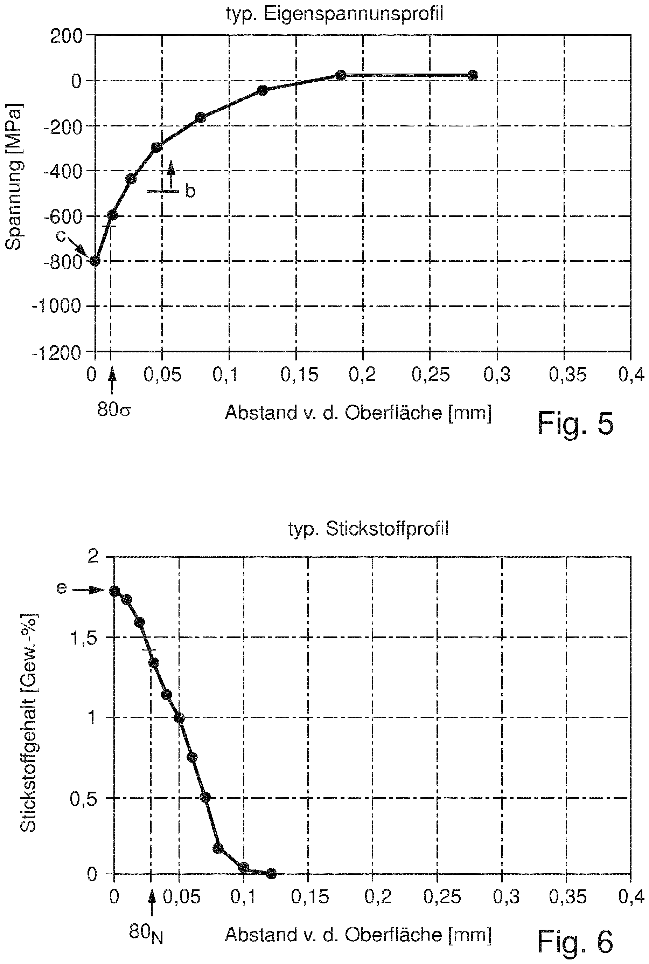

Fig. 5 zeigt den Eigenspannungsverlauf innerhalb des Wälzlagerbauteils 4 nach Fig. 3. An der Oberfläche des Wälzlagerbauteils 4 hat die Druckeigenspannung einen Betrag von 800 MPa (Detail c). Die 80%-Druckeigenspannungsgrenze 80_{σ} liegt in einer Tiefe zwischen 0,005 mm und 0,02 mm. In einer Tiefe von 0,05 mm ist der Betrag der Druckeigenspannung bereits auf weniger als die Hälfte des Betrags der Druckeigenspannung an der Werkstückoberfläche abgesunken (Detail d). In einer Tiefe > 0,3 mm des Wälzlagerbauteils 4 liegen im Vergleich zu den Druckeigenspannungen in der Randzone 5 betragsmäßig sehr geringe Zugeigenspannungen vor.

Fig. 6 zeigt den Verlauf des Stickstoffgehalts innerhalb des Wälzlagerbauteils 4 nach Fig. 3. An der Werkstückoberfläche beträgt der Stickstoffgehalt zwischen 1,5% und 2,0% (Detail e; Angaben in Gew.-%). Von der Werkstückoberfläche aus fällt der Stickstoffgehalt kontinuierlich ab. Die 80%- Stickstoffgrenze 80_{N} liegt in einer Tiefe zwischen 0,02 mm und 0,04 mm.

Die aufgestickte Randzone 5 mit den beschriebenen Eigenschaften liefert eine für Überrollbeanspruchung sehr vorteilhafte Ausbildung von Härte und Druckeigenspannung sowohl im Betrieb unter erschwerten Bedingungen als auch im Falle einer lokalen Schädigung dieser Schicht.

### Bezugszeichenliste

- 1: Wälzlager
- 2: Lagerring, Wälzlagerbauteil
- 3: Lagerring, Wälzlagerbauteil
- 4: Wälzkörper, Wälzlagerbauteil
- 5: Randzone
- 6: Kernzone
- σ_{eig}: Eigenspannung (allgemein)
- σ_{eig, max}: Eigenspannung in unbeeinflußter aufgestickter Schicht
- φ*: Winkelbereich, in dem die Eigenspannung aufgebaut wird
- dφ: differentieller Winkelbereich
- R: Radius der aufgestickten Schicht
- t: Dicke der aufgestickten Schicht
- τ: Schubspannung
- 80_{N}: 80%-Stickstoffgrenze
- 80_{σ}: 80%-Druckeigenspannungsgrenze

## Patentansprüche

1. Wälzlagerbauteil (2,3,4), mit
- einer aufgestickten Randzone (5) mit von außen nach innen abnehmendem Stickstoffgehalt,
- einer Kernzone (6),
- von außen nach innen abnehmenden Druckeigenspannungen in der Randzone (5),
- einer Härte von 870 bis 1000 HV 0,3 in einer Tiefe von 0,04 mm, wobei
- die Härte in einer Tiefe von 0,3 mm um höchstens 250 HV 0,3 geringer als in der Tiefe von 0,04 mm ist und, in HV 0,3 angegeben, mehr als 75% der Härte in der Tiefe von 0,04 mm beträgt,
wobei der Absolutbetrag der Druckeigenspannung an der Oberfläche mindestens 500 MPa und höchstens 1000 MPa beträgt
und wobei der Betrag der Druckeigenspannung in einer Tiefe von 0,05 mm weniger als 60% des Betrages der Druckeigenspannung an der Oberfläche beträgt.

2. Wälzlagerbauteil (2,3,4) nach Anspruch 1, **dadurch gekennzeichnet, dass** die Tiefe (80_{N}), in welcher 80% des Maximalwerts des Stickstoffgehalts in der Randzone (5) unterschritten wird, mindestens der 1,75 fachen Tiefe (80_{σ}) entspricht, in welcher die Druckeigenspannung 80% der maximalen Druckeigenspannung beträgt.

3. Wälzlagerbauteil (2,3,4) nach Anspruch 2, **dadurch gekennzeichnet, dass** die Tiefe (80_{N}), in welcher 80% des Maximalwerts des Stickstoffgehalts in der Randzone (5) unterschritten wird, höchstens der achtfachen Tiefe (80_{σ}) entspricht, in welcher die Druckeigenspannung 80% der maximalen Druckeigenspannung beträgt.

4. Wälzlagerbauteil (2,3) nach einem der Ansprüche 1 bis 3, **dadurch gekennzeichnet, dass** dieses als Lagerring (2,3) ausgebildet ist.

5. Wälzlagerbauteil (4) nach einem der Ansprüche 1 bis 3, **dadurch gekennzeichnet, dass** dieses als Wälzkörper (4) ausgebildet ist.

6. Wälzlager mit einem Wälzlagerbauteil (2,3,4) nach Anspruch 4 oder 5.

## Claims

1. Rolling-element bearing component (2, 3, 4), having
- a nitrided edge region (5) having a nitrogen content that decreases from the outside in,
- a core zone (6),
- residual compressive stresses, in the edge region (5), that decrease from the outside in,
- a hardness of 870 to 1000 HV 0.3 at a depth of 0.04 mm,
wherein
the hardness at a depth of 0.3 mm is at most 250 HV 0.3 less than at the depth of 0.04 mm and, as indicated in HV 0.3, represents more than 75% of the hardness at the depth of 0.04 mm,
wherein the absolute magnitude of the residual compressive stress at the surface is at least 500 MPa and at most 1000 MPa,
and wherein the magnitude of the residual compressive stress at a depth of 0.05 mm is less than 60% of the magnitude of the residual compressive stress at the surface.

2. Rolling-element bearing component (2, 3, 4) according to Claim 1, **characterized in that** the depth (80_{N}), at which the nitrogen content drops below 80% of the maximum value in the edge region (5), corresponds to at least 1.75 times the depth (80_{σ}) at which the residual compressive stress is 80% of the maximum residual compressive stress.

3. Rolling-element bearing component (2, 3, 4) according to Claim 2, **characterized in that** the depth (80_{N}), at which the nitrogen content drops below 80% of the maximum value in the edge region (5), corresponds to at most eight times the depth (80_{σ}) at which the residual compressive stress is 80% of the maximum residual compressive stress.

4. Rolling-element bearing component (2, 3) according to one of Claims 1 to 3, **characterized in that** it is designed as a bearing ring (2, 3).

5. Rolling-element bearing component (4) according to one of Claims 1 to 3, **characterized in that** it is designed as a rolling body (4).

6. Rolling-element bearing having a rolling-element bearing component (2, 3, 4) according to Claim 4 or 5.

## Revendications

1. Composant de palier à roulement (2, 3, 4), comprenant
- une zone de bord nitrurée (5) avec une teneur en azote diminuant de l'extérieur vers l'intérieur,
- une zone de noyau (6),
- des tensions propres de compression diminuant de l'extérieur vers l'intérieur dans la zone de bord (5),
- une dureté de 870 à 1000 HV 0, 3 à une profondeur de 0,04 mm,
- la dureté à une profondeur de 0,3 mm étant inférieure d'au maximum 250 HV 0,3 à la dureté à la profondeur de 0,04 mm, et indiquée en HV 0,3, étant supérieure à 75% de la dureté à la profondeur de 0,04 mm,
la valeur absolue de la tension propre de compression à la surface étant d'au moins 500 MPa et d'au plus 1000 MPa, et
la valeur de la tension propre de compression à une profondeur de 0,05 mm étant inférieure à 60 % de la valeur de la tension propre de compression à la surface.

2. Composant de palier à roulement (2, 3, 4) selon la revendication 1, **caractérisé en ce que** la profondeur (80_{N}) à laquelle la teneur en azote est
inférieure à 80 % de la valeur maximale de la teneur en azote dans la zone de bord (5) correspond à au moins 1,75 fois la profondeur (80_{σ}) à laquelle la tension propre de compression vaut 80 % de la tension propre de compression maximale.

3. Composant de palier à roulement (2, 3, 4) selon la revendication 2, **caractérisé en ce que** la profondeur (80_{N}) à laquelle la teneur en azote est inférieure à 80 % de la valeur maximale de la teneur en azote dans la zone de bord (5) correspond à au plus huit fois la profondeur (80σ) à laquelle la tension propre de compression vaut 80 % de la tension propre de compression maximale.

4. Composant de palier à roulement (2, 3) selon l'une quelconque des revendications 1 à 3, **caractérisé en ce que** celui-ci est réalisé sous forme de bague de palier (2, 3).

5. Composant de palier à roulement (4) selon l'une quelconque des revendications 1 à 3, **caractérisé en ce que** celui-ci est réalisé sous forme de corps de roulement (4).

6. Palier à roulement comprenant un composant de palier à roulement (2, 3, 4) selon la revendication 4 ou 5.
